# EUROPÄISCHE PATENTSCHRIFT

(11) **EP 1 877 171 B1**
(45) Veröffentlichungstag und Bekanntmachung des Hinweises auf die Patenterteilung: **31.03.2010**
(21) Anmeldenummer: 06763082.2
(22) Anmeldetag: 03.05.2006
(51) Int. Cl.: B01J 2/08, C11D 3/37, C11D 17/00

(54) **FESTE, REDISPERGIERBARE EMULSION**
SOLID REDISPERSIBLE EMULSION
EMULSION SOLIDE REDISPERSABLE

(30) Priorität: 03.05.2005 DE 102005020551
(43) Veröffentlichungstag der Anmeldung: 16.01.2008
(73) Patentinhaber: Evonik Degussa GmbH, 45128 Essen (DE)
(72) Erfinder: WENK, Hans Henning, 45138 Essen (DE); SCHICK, Georg, Chester, VA 23831 (US); JOHN, Kathrin, 22177 Hamburg (DE)
(86) Internationale Anmeldenummer: PCT/EP2006/062019
(87) Internationale Veröffentlichungsnummer: WO 2006/117385

(56) Entgegenhaltungen:
- US-A- 4 908 233
- US-A- 6 036 887
- US-A1- 2003 087 788

## Beschreibung

Gegenstand der vorliegenden Erfindung ist eine feste, redispergierbare Emulsion.

Der Einsatz fester, redispergierbarer Emulsionen ermöglicht die Unabhängigkeit von Lösemitteln, was insbesondere unter lagerungs- bzw. transporttechnischen Aspekten deutliche Vorteile beinhaltet. Aber auch die sonst üblichen Stabilitätsprobleme, die bei flüssigen Formulierungen häufig sehr ausgeprägt sind, werden durch feste Formulierungsalternativen vermieden.

Zur Überführung von Flüssigkeiten in eine Pulverform stellt der Stand der Technik zahlreiche unterschiedliche Verfahren zur Verfügung. Am bekanntesten ist die Sprühtrocknung mit Hilfe geeigneter Trägermaterialien. Möglich ist aber auch die Adsorption an einen festen Trägerstoff oder die Verkapselung mit einem geeigneten Hüllmaterial.

Sowohl die Sprühtrocknung als auch die Adsorption sind aber nicht für sämtliche Problemlösungen geeignet, da insbesondere bei Emulsionen eine nur wenig ausgeprägte Beladung des Trägermaterials mit der Emulsion erreicht werden kann und außerdem die Emulsion in Gegenwart des Trägermaterials häufig nicht stabil ist. Zusätzlich setzen durch Sprühtrocknung oder Adsorption hergestellte Emulsionspulver häufig die Ölkomponente bereits unter mäßiger Krafteinwirkung, wie sie z. B. bei der Verarbeitung oder Lagerung auftritt, zum Teil wieder frei.

Gut bekannt sind auch Verfahren zur Verkapselung hydrophober Flüssigkeiten oder von Wasser-in-Öl-Emulsionen. Aus GB 911,483 ist zum Beispiel die Verkapselung von Emulsionen hydrophiler Flüssigkeiten in Öl durch Koazervierung in wässrigen Lösungen bekannt. Derartige Verfahren sind allerdings nicht zur Verkapselung hydrophiler Flüssigkeiten oder von Öl-in-Wasser-Emulsionen geeignet, da sich die hydrophile Phase mit der wässrigen Verkapselungslösung vermischen würde.

Aus dem Stand der Technik sind zusätzlich Verkapselungsmethoden bekannt, mit deren Hilfe gezielt die verkapselte Komponente durch Änderung der sie umgebenden Medien freigesetzt werden. In den meisten Fällen wird durch Temperatur- oder pH-Wert-Änderungen das Freisetzungsprofil der verkapselten Komponente beeinflusst. Aus der internationalen Patentanmeldung WO 03/091379 A1 ist eine Zusammensetzung bekannt, die aus hydrophoben Nanopartikeln besteht, welche in einer feuchtigkeitsempfindlichen Matrix verkapselt sind. Diese Nanopartikel können z. B. einen Weichspüler enthalten, der bei Kontakt mit Wasser aus der äußeren Matrix freigesetzt wird. Dieses Verfahren ist allerdings für Öl-in-Wasser-Emulsionen einer hydrophoben Flüssigkeit nicht geeignet, da die wasserlösliche Matrix nicht mit der wässrigen Phase derartiger Emulsionen kompatibel ist.

Die vorveröffentlichte US-Anmeldung US 2004/0029760 A1 beschreibt ein Waschhilfsmittel in Form einer Zusammensetzung, die eine langsame und kontrollierte Freisetzung der Inhaltsstoffe, wie z. B. Duftstoffe ermöglicht. Zu diesem Zweck wird die aktive Komponente auf einem porösen Trägermaterial adsorbiert und dieses anschließend mit dem Verkapselungsmaterial beschichtet.

Auch diese Methode ist nicht zur Verkapselung von Öl-in-Wasser-Emulsionen geeignet, da diese nicht ohne Koaleszenz von porösen Materialien adsorbiert werden und außerdem ein wasserlösliches Verkapselungsmaterial, wie es für die Freisetzung in der Waschlauge notwendig ist, nicht zur Verkapselung wasserbasierter Systeme geeignet ist.

Zusammensetzungen mit kontrollierter Freisetzung, die aus Nanopartikeln der aktiven Komponente bestehen, welche ihrerseits in einer pH- oder salzempfindlichen Mikrokapsel eingeschlossen sind, beschreibt die Patentanmeldung US 2003/0195133 A1. Wie auch die bereits beschriebenen Verfahren, ist auch diese Methode ausschließlich zur Verkapselung hydrophober, nicht mit Wasser mischbarer Stoffe, nicht jedoch einer wässrigen Emulsion geeignet.

US 6,036,887 beschreibt feste redispergierbare Emulsionen in Granulatform, die eine hydrophobe flüssige Aktivkomponente, ein nichtionisches Polyoxyalkylentensid und einen wasserlöslichen Polyelektrolyt mit schwach sauren Gruppen umfassen.

US 2003/0087788 beschreibt feste redispergierbare Emulsionen in Granulatform, die Tropfen eines hydrophoben Duftstoffs in einer organischen Matrix enthalten, wobei die Matrix aus einem Polypeptid und/oder einem Polyelektrolyt mit schwach sauren Gruppen besteht.

Bislang ist aus dem Stand der Technik kein geeignetes System bekannt, mit dem eine Öl-in-Wasser-Emulsion einer hydrophoben Flüssigkeit, wie sie z. B. Weichspüler darstellen, in eine feste Form übergeführt werden kann, so dass einerseits mechanisch feste Partikel erhalten werden, andererseits jedoch unter kontrollierten Bedingungen eine Auflösung unter vollständiger Wiederherstellung der Emulsion erfolgt. Besonders vorteilhaft wäre ein solches System für Wäschepflegemittel, die meist aus wasserunlöslichen Substanzen bestehen und die aus diesem Grund bislang häufig in Form flüssiger Emulsionen eingesetzt werden müssen. Prominente Beispiele hierfür sind weichspüleremulsionen, die bislang ausschließlich in flüssiger Form erhältlich sind. Als gravierender Nachteil wird bei den flüssigen Weichspülern gesehen, dass diesen Dosierungsformen große Anteile nicht aktiver Komponenten wie Wasser, Alkohole, Dispergierhilfsmittel oder Stabilisatoren zugesetzt werden müssen. Hinzu kommt, dass die Handhabung der flüssigen Weichspüler deutlich von der klassischer Waschpulver abweicht, was Dosierung und Handhabung insgesamt ungünstig macht.

Die einfache Übertragbarkeit der aus dem Stand der Technik genannten Verfahren zur Überführung von Flüssigkeiten in Pulverform ist bei Waschhilfsmitteln und insbesondere Weichspülern sehr schwierig, da das Hüllmaterial einerseits in einem wässrigen System, wie sie Waschlaugen typischerweise darstellen, löslich sein muss, um so zu gewährleisten, dass der Inhalt der festen Pulverform im Waschgang tatsächlich auch in der gewünschten Menge freigesetzt wird. Andererseits darf sich das Hüllmaterial aber nicht in der kontinuierlichen wässrigen Phase der zu verkapselnden Öl-in-Wasser-Emulsion lösen.

Aus den bekannten Mängeln des Standes der Technik hat sich für die vorliegende Erfindung die Aufgabe gestellt, eine feste, redispergierbare Emulsion, bestehend aus einer Öl-in-Wasser-Emulsions-Komponente bereitzustellen, mit der es möglich wird, Wäschepflegemittel und typischerweise Weichspüler in einer Darreichungsform anzubieten, die zum einen auf überflüssige, nicht aktive Komponenten, wie Wasser, Dispergierhilfsmittel und Stabilisatoren, verzichtet, zum anderen die Handhabung derartiger Emulsionen aber erleichtert, da sie bspw. wie die anderen Waschzusätze auch als Pulver dosiert werden können und dabei zudem einen möglichst hohen Anteil der aktiven Substanz enthält.

Gelöst wurde diese Aufgabe mit einer festen, redispergierbaren Emulsion, bestehend aus einer Öl-in-Wasser-Emulsions-Komponente, die in einer durch mehrwertige Metallionen stabilisierten Hülle verkapselt ist, die wasserunlöslich ist und durch Abgabe der Metallionen wasserlöslich wird.

Überraschend hat sich gezeigt, dass nicht nur die Aufgabenstellung erfüllt wurde, indem mechanisch stabile Partikel bereitgestellt werden, die in Wasser unlöslich sind, sondern dass eine Darreichungsform erhalten wurde, deren Hülle sich insbesondere in den üblichen Waschmedien unter solchen Bedingungen auflöst, dass die Emulsion der Öl-Komponente trotz des äußerst geringen Wasseranteils der festen Teilchen vollständig wiederhergestellt wird. Zusätzlich hat sich gezeigt, dass eine sehr hohe Beladung des Produktes (bis weit über 75 %) mit den jeweils aktiven Substanzen erreicht werden kann, was nicht nur ökologisch, sondern auch ökonomisch äußerst vorteilhaft ist. Als ökologisch positiv hat sich ebenfalls herausgestellt, dass Hüllmaterialien eingesetzt werden können, die auf biologisch abbaubaren Substanzen natürlichen Ursprungs beruhen, wodurch die Umweltbelastung, bspw. durch Waschablaugen, weiter reduziert werden kann.

Ausgehend vom bisher bekannten Stand der Technik, der insbesondere bei den Wäschepflegemitteln große Nachteile aufwies, war die Summe der festgestellten Vorteile so nicht zu erwarten.

Es hat sich insbesondere eine feste Emulsion gemäß vorliegender Erfindung als vorteilhaft herausgestellt, bei der es sich bei der Emulsions-Komponente um eine wäschepflegende Komponente und vorzugsweise um einen Weichspüler handelt. Möglich ist aber auch ein Faserschutzadditiv, ein Duftstoff, ein Haarfärbemittel, ein Haarkonditioniermittel oder ein Mittel zur Haarbleichung oder -formgebung.

Bezüglich des Hüllmaterials haben sich Polysaccharide als sehr vorteilhaft herausgestellt, und zwar vor allem solche, die über Säuregruppen in freier oder Salzform verfügen. Hier sind insbesondere Alginate oder Pektine und besonders bevorzugt Alginsäure, Natrium-, Kalium- oder Ammoniumalginat, ein niedrig verestertes oder amidiertes Pektin, Carrageenane oder Mischungen daraus zu bevorzugen. Grundsätzlich geeignet sind jedoch alle wasserlöslichen Polymere, die unter Gelbildung reversibel mit mehrwertigen Metallionen reagieren.

Wie bereits angedeutet, entwickelt die erfindungsgemäße, feste, redispergierbare Emulsion ihre Vorteile insbesondere dann, wenn es sich beim Hüllmaterial um biologisch abbaubare Polysaccharide handelt, was die vorliegende Erfindung ebenfalls berücksichtigt.

Ein erfindungswesentliches Merkmal der vorliegenden Erfindung ist darin zu sehen, dass die Hülle der Emulsions-Komponente durch mehrwertige Metallionen stabilisiert ist, wodurch nicht nur die Hülle, sondern auch die gesamte Emulsion wasserunlöslich ist. Als geeignete mehrwertige Metallionen sieht die vorliegende Erfindung mindestens ein Metallion der Reihe Ca²⁺, Sr²⁺, Ba²⁺, Al³⁺, Cu²⁺, und Zn²⁺ vor. Diese Metallionen liegen zunächst stabil in der Hülle vor und werden erst im wässrigen Medium und in Gegenwart von geeigneten Verbindungen, die in der Lage sind, mehrwertige Metallionen zu binden, aus der Hülle gelöst. Im Falle von Waschlaugen kann dies durch Komponenten geschehen, die im Waschmittel vorliegen. Typischerweise kann es sich dabei um Wasserenthärter, wie Zeolithe, EDTA und deren Salze, Polyphosphate, Pyrophosphate, Carboxymethyloxysuccinate, Polyacrylate, Citrate oder Nitrilotriacetate handeln.

Die vorliegende Erfindung sieht auch vor, dass der Anteil der Öl-Komponente in der festen, redispergierbaren Emulsion mindestens 30 Gew.-% beträgt, wobei Anteile > 50 Gew.-% und insbesondere > 75 Gew.-%, bezogen auf die Gesamtemulsion, als bevorzugt gelten.

Neben der festen, redispergierbaren Emulsion selbst umfasst die vorliegende Erfindung auch ein Verfahren zu deren Herstellung. Dabei wird im Verfahrensschritt a) die Öl-Komponente zunächst in Wasser emulgiert, was gegebenenfalls in Gegenwart eines geeigneten Emulgators geschehen kann. Anschließend wird in Verfahrensschritt b) die Emulsion aus Verfahrensschritt a) mit einer Lösung des Hüllmaterials in Wasser vermischt. Dann wird in Verfahrensschritt c) die aus Verfahrensschritt b) erhaltene Mischung in eine Lösung eingebracht, die die mehrwertigen Metallionen enthält.

Alternativ kann auch in Verfahrensschritt a) eine Lösung des Hüllmaterials in Wasser hergestellt werden, anschließend in Verfahrensschritt b) die Öl-Komponente in der Lösung aus Verfahrensschritt a) emulgiert werden, gegebenenfalls unter Zugabe eines geeigneten Emulgators, und schließlich in Verfahrensschritt c) die Emulsion aus Verfahrensschritt b) in eine mehrwertige Metallionen enthaltende Fällungslösung eingebracht werden.

Ebenfalls möglich ist ein Verfahren, bei dem in Verfahrensschritt a) eine Emulsion der Öl-Komponente in Wasser, gegebenenfalls unter Verwendung eines Emulgators, hergestellt wird, in Verfahrensschritt b) das Hüllmaterial in der Emulsion aus Verfahrensschritt a) gelöst wird, und wiederum in Verfahrensschritt c) die in Verfahrensschritt b) erhaltene Lösung in die Fällungslösung eingebracht wird, die mehrwertige Metallionen enthält.

Auf diese Weise wird die Emulsion in einem durch Einlagerung mehrwertiger Metallionen stabilisierten Hüllmaterial, das in Wasser unlöslich ist, verkapselt.

Vorzugsweise werden im Verfahrensschritt c) als Fällungslösungen Lösungen zwei- oder dreiwertiger Metallsalze in Wasser oder in Alkohol/Wasser-Gemischen eingesetzt. Besonders geeignet sind Lösungen von Erdalkalimetallsalzen in Wasser/Isopropanol-Gemischen.

Falls der Verfahrensschritt a) in Gegenwart eines Emulgators durchgeführt werden soll, kann erfindungsgemäß auf Polysaccharide zurückgegriffen werden, die gegebenenfalls chemisch modifiziert sein können. Besonders geeignet sind in diesem Fall Hydrokolloide.

Ein weiterer Vorteil des erfindungsgemäßen Verfahrens zeigt sich darin, dass die Größe der Partikel durch die geeignete Wahl des zum Eintropfen in die Fällungslösung verwendeten Verfahrens über einen relativ großen Bereich variiert werden kann. Über die Partikelgröße kann zusätzlich auch die Auflösungsgeschwindigkeit kontrolliert werden. Die Erzeugung der Tropfen ist an kein bestimmtes Verfahren gebunden, weshalb geeignete Methoden aus dem Stand der Technik, wie sie die Zerstäubung durch einen Luftstrom, ein angeregter Strahlzerfall durch Vibrationsanregung oder so genannte Jet-Cutter darstellen, je nach Eignung herangezogen werden können.

Die so aus Verfahrensschritt c) erhaltenen Partikel können aus der Fällungslösung durch die bekannten Verfahren zur fest/flüssig-Trennung abgetrennt werden. Stellvertretend sei hier die Filtration genannt, die gegebenenfalls mit Hilfe von Über- oder Unterdruck durchgeführt werden kann, aber auch die Sedimentation oder Zentrifugation. Gegebenenfalls kann der abgetrennte Feststoff vor der Trocknung gewaschen werden, wofür üblicherweise Wasser, Alkohole oder geeignete Gemische daraus zum Einsatz kommen. Möglich ist aber auch der Zusatz von Substanzen zur Waschlösung, die ein Zusammenkleben der Teilchen vermeiden. Hierfür kommen z. B. oberflächenaktive Substanzen wie Phospholipide, Tenside, Polysorbate oder Ähnliches, aber auch unlösliche Trennmittel wie z. B. Kieselsäuren in Frage. Für die Trocknung des Produktes kann auf die üblichen Verfahren und Vorrichtungen zurückgegriffen werden, wobei Kontakt- oder Wirbelschichttrockner zu bevorzugen sind, da in jedem Falle der geringen mechanischen Stabilität der erhaltenen Partikel im noch feuchten Zustand Rechnung zu tragen ist.

Schließlich umfasst die vorliegende Erfindung auch noch die Verwendung der festen, redispergierbaren Emulsion in Wäschepflegemitteln. In diesem Zusammenhang kann es vorteilhaft sein, wenn diese Pflegemittel mit Komponenten kombiniert werden, die in der Lage sind, in flüssiger Umgebung Metallionen zu binden. Hier seien insbesondere Komplexierungsmittel wie Polyphosphate, Zeolithe und sonstige Wasserenthärter genannt, die als sog. "builder" ohnehin in den meisten Fällen übliche Bestandteile von Waschpulvern darstellen. Auf diese Weise kann die Freisetzung der im Hüllmaterial stabilisierten mehrwertigen Metallionen in einer wässrigen Umgebung unterstützt werden. Für Waschlaugen bedeutet dies, dass die Komponenten eines handelsüblichen Waschpulvers, welches beispielsweise mit der erfindungsgemäßen, festen, redispergierbaren Emulsion vermischt worden ist, dazu beitragen, die in der Hülle der festen Emulsion festgelegten mehrwertigen Metallionen freizusetzen, wodurch die Hülle selbst wasserlöslich wird und so zeit- und mediumabhängig die zunächst verkapselte Emulsionskomponente in das wässrige Medium abgegeben wird. Handelt es sich bei der Emulsionskomponente um einen Weichspüler, kann er dort seine gewünschte Wirkung an den Textilfaser entfalten.

Zusammenfassend ist festzustellen, dass es mit der vorliegenden Erfindung möglich wird, insbesondere Weichspüleremulsionen, die bislang lediglich als Flüssigformulierungen bereit standen, nun in fester Pulverform zur Verfügung zu stellen. Auf diese Weise können die Weichspüler selbst besser gelagert, dosiert und gegebenenfalls mit pulverförmigen Waschmitteln formuliert werden. Zusätzlich kann durch den Wegfall der sonst üblicherweise benötigten nicht aktiven Komponenten die ökologische Bilanz deutlich verbessert werden.

Die nachfolgenden Beispiele verdeutlichen die Vorteile der vorliegenden Erfindung.

### Beispiele

### Beispiel 1

10 g eines aminofunktionellen Polydimethylsiloxans wurden in 90 ml einer 2 %igen Guarlösung emulgiert. Die Emulsion wurde mit dem gleichen Volumen einer 1 %igen Lösung von Natriumalginat in Wasser versetzt. Das Gemisch wurde anschließend in eine 0,1 M Lösung von CaCl₂ in 50 % Isopropanol getropft, die erstarrten Gelkugeln durch Filtration abgetrennt und dann in einem Wirbelschichttrockner bei 100 °C bis zu einer Restfeuchte von 2 Gew.-% getrocknet. Das erhaltene grobe Pulver zeigte in destilliertem Wasser über einen Zeitraum von mehreren Stunden keine Veränderung, löste sich jedoch in 0,1 M EDTA-Lösung rasch unter vollständiger Rückbildung der Emulsion auf.

### Beispiel 2

10 g eines Orangenöls wurden in 90 ml einer 2 zeigen Gummi Arabicum Lösung emulgiert. Die Emulsion wurde mit dem gleichen Volumen einer 1 %igen Lösung von Natriumalginat in Wasser versetzt. Anschließend wurde das Gemisch in eine 0,1 M CaCl₂-Lösung getropft, die erstarrten Gelkugeln durch Filtration abgetrennt und in einem Wirbelschichttrockner bei 60 °C bis zu einem Wassergehalt von 2 Gew.-% getrocknet. Das erhaltene grobe Pulver ist in Wasser unlöslich, es löst sich jedoch in 0,1 M EDTA-Lösung rasch auf, wobei eine trübe Emulsion entsteht.

## Patentansprüche

1. Feste, redispergierbare Emulsion, bestehend aus einer Öl-in-Wasser-Emulsion einer wäschepflegenden Komponente, die in einer durch mehrwertige Metallionen stabilisierten Hülle aus einem Hüllmaterial verkapselt ist, die wasserunlöslich ist und durch Abgabe der Metallionen wasserlöslich wird.

2. Feste Emulsion nach Anspruch 1,
**dadurch gekennzeichnet,**
**dass** es sich bei der wäschepflegenden Komponente um einen Weichspüler handelt.

3. Feste Emulsion nach einem der Ansprüche 1 oder 2,
**dadurch gekennzeichnet,**
**dass** es sich bei dem Hüllmaterial um mindestens ein Polysaccharid, insbesondere ein Säuregruppen in freier oder Salzform enthaltendes Polysaccharid, handelt.

4. Feste Emulsion nach Anspruch 3,
**dadurch gekennzeichnet,**
**dass** das Polysaccharid ausgewählt ist aus der Reihe Alginate, Pektine und Carrageenane, vorzugsweise aus Alginsäure, Natriumalginat, Kaliumalginat oder Ammoniumalginat, niedrig verestertem oder amidiertem Pektin, κ-Carrageenan oder Mischungen daraus.

5. Feste Emulsion nach Anspruch 3 oder 4,
**dadurch gekennzeichnet,**
**dass** das Polysaccharid biologisch abbaubar ist.

6. Feste Emulsion nach einem der Ansprüche 1 bis 5,
**dadurch gekennzeichnet,**
**dass** die Hülle als mehrwertiges Metallion mindestens eines aus der Reihe Ca²⁺, Sr²⁺, Ba²⁺, Al³⁺, Cu²⁺, Zn²⁺ enthält.

7. Feste Emulsion nach einem der Ansprüche 1 bis 6,
**dadurch gekennzeichnet,**
**dass** der Anteil der wäschepflegenden Komponente mindestens 30 Gew.-%, vorzugsweise mehr als 50 Gew.-% und insbesondere mehr als 75 Gew.-%, bezogen auf die Gesamtemulsion, beträgt.

8. Verfahren zur Herstellung einer festen, redispergierbaren Emulsion nach einem der Ansprüche 1 bis 7,
**dadurch gekennzeichnet,**
**dass**
a) die wäschepflegende Komponente zunächst, optional in Gegenwart eines Emulgators, in Wasser emulgiert wird, anschließend
b) die Emulsion aus Verfahrensschritt a) mit einer Lösung des Hüllmaterials in Wasser vermischt wird oder das Hüllmaterial in der Emulsion aus Verfahrensschritt a) gelöst wird, und dann
c) die Mischung aus Verfahrensschritt b) in eine die mehrwertigen Metallionen enthaltende Lösung eingebracht wird.

9. Verfahren zur Herstellung einer festen, redispergierbaren Emulsion nach einem der Ansprüche 1 bis 7,
**dadurch gekennzeichnet,**
**dass**
a) das Hüllmaterial in Wasser gelöst wird, anschließend
b) in der Lösung aus Verfahrensschritt a) die wäschepflegende Komponente, optional in Gegenwart eines Emulgators, emulgiert wird und dann
c) die aus Verfahrensschritt b) erhaltene Emulsion in eine Fällungslösung eingebracht wird, die mehrwertige Metallionen enthält.

10. Verfahren nach einem der Ansprüche 8 oder 9,
**dadurch gekennzeichnet,**
**dass** als Fällungslösung in Verfahrensschritt c) Lösungen zwei- oder dreiwertiger Metallsalze in Wasser oder Alkohol/Wasser-Gemischen eingesetzt werden, vorzugsweise Lösungen von Erdalkalimetallsalzen und besonders bevorzugt Calciumchlorid in Wasser/Isopropanol-Gemischen.

11. Verfahren nach einem der Ansprüche 8 bis 10,
**dadurch gekennzeichnet,**
**dass** als Emulgator ein Polysaccharid, das optional chemisch modifiziert sein kann, und vorzugsweise ein Hydrokolloid verwendet wird.

12. Verfahren nach einem der Ansprüche 8 bis 11,
**dadurch gekennzeichnet,**
**dass** die aus Verfahrensschritt c) erhaltenen Partikel abgetrennt, optional gewaschen und getrocknet werden, insbesondere in einem Kontakt- oder Wirbelschichttrockner.

13. Verfahren nach Anspruch 12,
**dadurch gekennzeichnet,**
**dass** in einem Kontakttrockner oder Wirbelschichttrockner getrocknet wird.

14. Verwendung der festen, redispergierbaren Emulsion nach einem der Ansprüche 1 bis 7 in Wäschepflegemitteln.

15. Verwendung nach Anspruch 14,
**dadurch gekennzeichnet,**
**dass** das Wäschepflegemittel eine die Metallionen bindende Komponente enthält.

16. Verwendung nach Anspruch 15,
**dadurch gekennzeichnet,**
**dass** die Metallionen bindende Komponente ausgewählt ist aus Zeolithen, EDTA und dessen Salzen, Polyphosphaten, Pyrophosphaten, Carboxymethyloxysuccinaten, Polyacrylaten, Citraten und Nitrilotriacetaten.

17. Verwendung nach Anspruch 14 oder 15,
**dadurch gekennzeichnet,**
**dass** das Wäschepflegemittel ein pulverförmiges Waschmittel ist.

## Claims

1. Solid redispersible emulsion consisting of an oil-in-water emulsion of a laundry care component which is encapsulated in a shell which is stabilized by polyvalent metal ions and is composed of a shell material which is water-insoluble and which becomes water-soluble through release of the metal ions.

2. Solid emulsion according to Claim 1,
**characterized in that**
the laundry care component is a fabric softener.

3. Solid emulsion according to one of Claims 1 and 2,
**characterized in that**
the shell material is at least one polysaccharide, especially a polysaccharide containing acid groups in free or salt form.

4. Solid emulsion according to Claim 3, **characterized in that** the polysaccharide is selected from the group of alginates, pectins and carrageenans, preferably from alginic acid, sodium alginate, potassium alginate or ammonium alginate, low-esterification or -amidation pectin, κ-carrageenan or mixtures thereof.

5. Solid emulsion according to Claim 3 or 4,
**characterized in that**
the polysaccharide is biodegradable.

6. Solid emulsion according to one of Claims 1 to 5,
**characterized in that**
the shell comprises, as a polyvalent metal ion, at least one from the group of Ca²⁺, Sr²⁺, Ba²⁺, Al³⁺, Cu²⁺, Zn²⁺.

7. Solid emulsion according to one of Claims 1 to 6,
**characterized in that**
the proportion of the laundry care component is at least 30% by weight, preferably more than 50% by weight and especially more than 75% by weight, based on the overall emulsion.

8. Process for producing a solid redispersible emulsion according to one of Claims 1 to 7,
**characterized in that**
a) the laundry care component is first emulsified in water, optionally in the presence of an emulsifier, then
b) the emulsion from process step a) is mixed with a solution of the shell material in water or the shell material is dissolved in the emulsion from process step a), and then
c) the mixture from process step b) is introduced into a solution comprising the polyvalent metal ions.

9. Process for producing a solid redispersible emulsion according to one of Claims 1 to 7,
**characterized in that**
a) the shell material is dissolved in water, then
b) the laundry care component is emulsified in the solution from process step a), optionally in the presence of an emulsifier, and then
c) the emulsion obtained from process step b) is introduced into a precipitation solution which comprises polyvalent metal ions.

10. Process according to one of Claims 8 and 9,
**characterized in that**
the precipitation solutions used in process step c) are solutions of di- or trivalent metal salts in water or alcohol/water mixtures, preferably solutions of alkaline earth metal salts and more preferably calcium chloride in water/isopropanol mixtures.

11. Process according to one of Claims 8 to 10,
**characterized in that**
the emulsifier used is a polysaccharide which may optionally be chemically modified, and preferably a hydrocolloid.

12. Process according to one of Claims 8 to 11,
**characterized in that**
the particles obtained from process step c) are separated, optionally washed and dried, especially in a contact dryer or fluidized bed dryer.

13. Process according to Claim 12,
**characterized in that**
drying is effected in a contact dryer or fluidized bed dryer.

14. Use of the solid redispersible emulsion according to one of Claims 1 to 7 in laundry care compositions.

15. Use according to Claim 14,
**characterized in that**
the laundry care composition comprises a component which binds the metal ions.

16. Use according to Claim 15, **characterized in that** the component which binds metal ions is selected from zeolites, EDTA and salts thereof, polyphosphates, pyrophosphates, carboxymethyloxysuccinates, polyacrylates, citrates and nitrilotriacetates.

17. Use according to Claim 14 or 15,
**characterized in that**
the laundry care composition is a pulverulent washing composition.

## Revendications

1. Émulsion solide redispersable, constituée d'une émulsion huile dans eau d'un composant de soin du linge, qui est encapsulée dans une enveloppe stabilisée par des ions métalliques polyvalents, constituée d'un matériau d'enveloppe qui est insoluble dans l'eau et qui devient soluble dans l'eau par élimination des ions métalliques.

2. Émulsion solide selon la revendication 1, **caractérisée en ce que** le composant de soin du linge est un adoucissant.

3. Émulsion solide selon l'une quelconque des revendications 1 ou 2, **caractérisée en ce que** le matériau d'enveloppe est au moins un polysaccharide, notamment un polysaccharide contenant un groupe acide sous forme libre ou sous forme saline.

4. Émulsion solide selon la revendication 3, **caractérisée en ce que** le polysaccharide est choisi dans la série des alginates, des pectines et des carraghénanes, de préférence parmi l'acide alginique, l'alginate de sodium, l'alginate de potassium ou l'alginate d'ammonium, la pectine faiblement estérifiée ou amidée, la K-carraghénane ou leurs mélanges.

5. Émulsion solide selon la revendication 3 ou 4, **caractérisée en ce que** le polysaccharide est biodégradable.

6. Émulsion solide selon l'une quelconque des revendications 1 à 5, **caractérisée en ce que** l'enveloppe contient au moins un ion de la série Ca²⁺, Sr²⁺, Ba²⁺, Al³⁺, Cu²⁺, Zn²⁺ en tant qu'ion métallique polyvalent.

7. Émulsion solide selon l'une quelconque des revendications 1 à 6, **caractérisée en ce que** la proportion du composant de soin du linge est d'au moins 30 % en poids, de préférence supérieure à 50 % en poids et notamment supérieure à 75 % en poids, par rapport à la totalité de l'émulsion.

8. Procédé de fabrication d'une émulsion solide redispersable selon l'une quelconque des revendications 1 à 7, **caractérisé en ce que**
a) le composant de soin du linge est tout d'abord émulsifié dans de l'eau, éventuellement en présence d'un émulsifiant, puis
b) l'émulsion de l'étape de procédé a) est mélangée avec une solution du matériau d'enveloppe dans de l'eau ou le matériau d'enveloppe est dissous dans l'émulsion de l'étape de procédé a), puis
c) le mélange de l'étape de procédé b) est introduit dans une solution contenant les ions métalliques polyvalents.

9. Procédé de fabrication d'une émulsion solide redispersable selon l'une quelconque des revendications 1 à 7, **caractérisé en ce que**
a) le matériau d'enveloppe est dissous dans de l'eau, puis
b) le composant de soin du linge est émulsifié dans la solution de l'étape de procédé a), éventuellement en présence d'un émulsifiant, puis
c) l'émulsion obtenue à l'étape de procédé b) est introduite dans une solution de précipitation, qui contient des ions métalliques polyvalents.

10. Procédé selon l'une quelconque des revendications 8 ou 9, **caractérisé en ce que** des solutions de sels métalliques bi- ou trivalents dans de l'eau ou des mélanges alcool/eau sont utilisées en tant que solution de précipitation à l'étape de procédé c), de préférence des solutions de sels de métaux alcalino-terreux et de manière particulièrement préférée du chlorure de calcium dans des mélanges eau/isopropanol.

11. Procédé selon l'une quelconque des revendications 8 à 10, **caractérisé en ce qu'**un polysaccharide, qui peut éventuellement être modifié chimiquement, et de préférence un hydrocolloïde, est utilisé en tant qu'émulsifiant.

12. Procédé selon l'une quelconque des revendications 8 à 11, **caractérisé en ce que** les particules obtenues à l'étape de procédé c) sont séparées, éventuellement lavées et séchées, notamment dans un séchoir à contact ou à couche fluidisée.

13. Procédé selon la revendication 12, **caractérisé en ce qu'**un séchage est réalisé dans un séchoir à contact ou un séchoir à couche fluidisée.

14. Utilisation de l'émulsion solide redispersable selon l'une quelconque des revendications 1 à 7 dans des agents de soin du linge.

15. Utilisation selon la revendication 14, **caractérisée en ce que** l'agent de soin du linge contient un composant qui lie les ions métalliques.

16. Utilisation selon la revendication 15, **caractérisée en ce que** le composant qui lie les ions métalliques est choisi parmi les zéolithes, l'EDTA et ses sels, les polyphosphates, les pyrophosphates, les carboxyméthyloxysuccinates, les polyacrylates, les citrates et les nitrilotriacétates.

17. Utilisation selon la revendication 14 ou 15, **caractérisée en ce que** l'agent de soin du linge est un agent de lavage sous forme de poudre.
